# EUROPEAN PATENT SPECIFICATION

(11) **EP 4 087 285 B1**
(45) Date of publication and mention of the grant of the patent: **23.04.2025**
(21) Application number: 20917671.8
(22) Date of filing: 10.10.2020
(51) Int. Cl.: H04W 4/06, H04W 36/02

(54) **COMMUNICATION MODE SWITCHING METHOD, AND APPARATUS AND DEVICE**
VERFAHREN ZUR UMSCHALTUNG DES KOMMUNIKATIONSMODUS, VORRICHTUNG UND GERÄT
PROCÉDÉ DE COMMUTATION DE MODE DE COMMUNICATION, ET APPAREIL ET DISPOSITIF

(30) Priority: 07.02.2020 WO PCT/CN2020/074519
(43) Date of publication of application: 09.11.2022
(73) Proprietor: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); WANG, Shukun, Dongguan, Guangdong 523860 (CN)
(74) Representative: Novagraaf Technologies
(86) International application number: PCT/CN2020/120230
(87) International publication number: WO 2021/155673

(56) References cited:
- EP-A1- 3 644 665
- WO-A1-2013/013412
- WO-A1-2016/163820
- WO-A1-2019/028893
- WO-A1-2019/028893
- WO-A1-2019/129212
- CN-A- 104 918 204
- CN-A- 104 918 204
- CN-A- 104 954 994
- CN-A- 110 519 814
- CN-A- 110 519 814
- US-A1- 2012 014 264
- SA WG6: "Potential work, impacts and requirements for MBS/5G for Mission Critical in Rel-17", 3GPP DRAFT; S6-191408_MBSOVER5G_REL-17, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Rome, ITALY; 20190708 - 20190712, 12 July 2019 (2019-07-12), Mobile Competence Centre ; 650, route des Lucioles ; F-06921 Sophia-Antipolis Cedex ; France, XP051757961

## Description

### TECHNICAL FIELD

Embodiments of the present disclosure generally relate to the communication technical field, and more particularly, to the technical field of communication conversion.

### BACKGROUND

Multimedia Broadcast Multicast Service (MBMS) is a service introduced in 3GPP R6 (Release 6). The MBMS is a technology that transmits data from one data source to multiple user equipments by sharing network resources. It can effectively utilize network resources while providing multimedia services, and realize high-speed multimedia service broadcast and multicast (also called groupcast).

Because the spectrum efficiency of MBMS in 3GPP R6 is low, it is not enough to effectively carry and support the operation of mobile TV type services. Therefore, in the Long Term Evolution (LTE) standard of the wireless access network, 3GPP clearly proposes to enhance the support capability for downlink high-speed multimedia broadcast and multicast services, and determines the design requirements for the physical layer and air interface.

In R9, Evolved MBMS (E-MBMS) is introduced in the LTE network. E-MBMS proposes the concept of Single Frequency Network (SFN), that is, using a uniform frequency to transmit data in all cells at the same time, but to ensure synchronization between cells. In this way, the overall signal-to-noise ratio distribution of the cells can be greatly improved, and the spectrum efficiency can also be greatly increased accordingly. And, based on IP (Internet Protocol) multicast protocol, broadcast and multicast of services can be realized.

In R13, Single Cell Point To Multipoint (SC-PTM) is introduced. SC-PTM is based on the MBMS network architecture. A Multi-cell/multicast Coordination Entity (MCE) decides whether to use the SC-PTM transmission mode or Multimedia Broadcast multicast service Single Frequency Network (MBSFN) transmission mode.

In the above communication systems, User Equipment, UE) may receive services in a groupcast manner. However, due to the mobility of the UE, the communication mode for receiving services may change. For example, the UE may move from a cell that supports multicast services to a cell that does not support multicast services, or moves from a cell that does not support multicast services to a cell that supports multicast services; or, in a same cell, the UE may move from a location where it cannot receive multicast signals to a location where it can receive multicast signals, or the UE may move from a location where it can receive multicast signals to a location where it cannot receive multicast signals. All these moving may result in a change in the communication mode. Therefore, it is needed to switch the communication mode. WO2019129212 discloses a communication method. an access network device transmits indication information to a user equipment, the indication information being used for indicating a receive mode of multicast service data, the receive mode comprising a unicast mode and/or a multicast mode; and the access network device transmits the multicast service data by using the unicast mode and/or the multicast mode indicated in the indication information. US 2012/014264 discloses method and user equipment for performing a handover between a MBSFN area and a non-MBSFN area in a communication network. The communication network comprises a first cell constituting a MBSFN area, a second cell not constituting the MBSFN area, and a reserved cell between the first cell and the second cell being subordinate to the MBSFN area, reserved cell indication information being broadcast in the reserved cell, the method comprises steps of: receiving the reserved cell indication information to learn that a user equipment is located in the reserved cell; measuring in the reserved cell, for a preset service, a first signal strength based on MBMS transmission and a second signal strength based on single-cell transmission; and selecting the first cell or the second cell as a target cell during a period in which a difference between the first signal strength and the second signal strength is lower than a preset threshold. WO 2019/028893 discloses that a first terminal device switches from a second terminal device to a network device; the first terminal device receives a first packet data convergence protocol (PDCP) data packet sent by the network device; and the first terminal device submits a second PDCP data packet if the first PDCP data packet is a target PDCP data packet, wherein the target PDCP data packet is a PDCP data packet sent by the network device according to a transmission status report, and the transmission status report is a status report sent by the first terminal device or the second terminal device to the network device and is used for feeding back the receiving condition of data sent by the network device to the first terminal device by means of the second terminal device before the first terminal devices switches to the network device; the second PDCP data packet is a PDCP data packet that starts from a count value of the first PDCP data packet and whose count value is continuous from the count value of the first PDCP data packet.

### SUMMARY

The present application is defined in the independent claims. Embodiments of the present disclosure provide a communication mode switching method, a device and an apparatus. Embodiments of the present disclosure provide at least the following technical solutions:
There is provided a communication mode switching method. The method is applied to a first network device, and the method includes:
sending a Packet Data Convergence Protocol (PDCP) data transmission status of user equipment in a first communication mode to a second network device, wherein the second network device is configured to use a second communication mode to deliver a service to the user equipment according to the PDCP data transmission status.

There is provided a communication mode switching method. The method is applied to a second network device, and the method includes:
sending a Packet Data Convergence Protocol (PDCP) data transmission status of user equipment to a first network device, wherein the first network device is configured to use a first communication mode to deliver a service to the user equipment according to the PDCP data transmission status.

There is provided a communication mode switching method. The method is applied to user equipment, and the method includes:
reporting a Packet Data Convergence Protocol (PDCP) data reception status in a first communication mode to a second network device; and
receiving a service which is delivered by the second network device using a second communication mode.

There is provided a communication mode switching device, including:
a forwarding module configured to send a Packet Data Convergence Protocol (PDCP) data transmission status of user equipment in a first communication mode to a second network device, wherein the second network device is configured to use a second communication mode to send a service to the user equipment according to the PDCP data transmission status.

There is provided a communication mode switching device, including:
a sending module configured to send a Packet Data Convergence Protocol (PDCP) data transmission status of user equipment to a first network device, wherein the first network device is configured to use a first communication mode to deliver a service to the user equipment according to the PDCP data transmission status.

There is provided a communication mode switching device, including:
a reporting module configured to report a Packet Data Convergence Protocol (PDCP) data reception status in a first communication mode to a second network device; and
a service receiving module configured to receive a service which is delivered by the second network device using a second communication mode.

There is provided a network device, including: a processor, a memory and a network interface, wherein the processor is configured to call a program in the memory to perform any one of the communication mode switching methods in embodiments of the present disclosure which is applied to the first network device and to send an execution result through the network interface.

There is provided a network device, including: a processor, a memory and a network interface, wherein the processor is configured to call a program in the memory to perform any one of the communication mode switching methods in embodiments of the present disclosure which is applied to the second network device and to send an execution result through the network interface.

There is provided user equipment, including: a processor, a memory and a network interface, wherein the processor is configured to call a program in the memory to perform any one of the communication mode switching methods in embodiments of the present disclosure which is applied to the user equipment and to send an execution result through the network interface.

There is provided a chip, including: a processor, wherein the processor is configured to call a computer program from a memory and executes the computer program to cause a device in which the chip is installed to perform any one of the communication mode switching methods in embodiments of the present disclosure.

There is provided a computer-readable storage medium having a program for an uplink transmission method stored thereon, wherein when the program for the uplink transmission method is executed by a processor, the processor is caused to perform any one of the communication mode switching methods in embodiments of the present disclosure.

There is provided a computer program product, wherein the computer program product is stored on a non-transitory computer-readable storage medium, and when a computer program is executed, any one of the communication mode switching methods in embodiments of the present disclosure is performed.

The beneficial effects of embodiments of the present disclosure are as follows. The PDCP data transmission status of the user equipment in the first communication mode is sent to the second network device, thereby ensuring the continuity of the PDCP sequence numbers during the communication mode switching procedure. In this way, communication mode switching is performed in the PDCP layer and thus lossless switching is realized.

### BRIEF DESCRIPTION OF THE DRAWINGS

FIG. 1 is a system architecture diagram to which an embodiment of the present disclosure is applied.
FIG. 2 is another system architecture diagram to which an embodiment of the present disclosure are applied.
FIG. 3 is a flowchart of a communication mode switching method according to an example embodiment of the present disclosure.
FIG. 4 is a flowchart of a communication mode switching method according to an example embodiment of the present disclosure.
FIG. 5 is a flowchart of a communication mode switching method according to an example embodiment of the present disclosure.
FIG. 6 is a flowchart of a communication mode switching method according to an example embodiment of the present disclosure.
FIG. 7 is a block diagram of a communication mode switching device applied to a first network device according to an example embodiment of the present disclosure.
FIG. 8 is a block diagram of a communication mode switching device applied to a second network device according to an example embodiment of the present disclosure.
FIG. 9 is a block diagram of a communication mode switching device applied to user equipment according to an example embodiment of the present disclosure.
FIG. 10 is a schematic structural diagram of a communication mode switching device according to an embodiment 6 of the present disclosure.

### DETAILED DESCRIPTION

In order to make the objectives, technical solutions and advantages of the present disclosure more clearly, the present disclosure will be described in further details below with reference to the accompanying drawings and embodiments. It should be understood that the embodiments described herein are only used to explain the present disclosure, but not to limit the present disclosure. The present disclosure may be implemented in many different forms and is not limited to the embodiments described herein. Rather, these embodiments are provided so that a thorough and complete understanding of the present disclosure is provided. Based on the example embodiments in the present disclosure, all other example embodiments obtained by those skilled in the art without creative work fall within the protection scope of the present disclosure.

Where the following description refers to the drawings, the same numerals in different drawings refer to the same or similar elements unless otherwise indicated.

Additionally, the terms "system" and "network" are often used interchangeably herein. The term "and/or" herein is only an association relationship to describe associated objects, indicating that there can be three kinds of relationships, for example, A and/or B can mean three cases: A alone, B alone, and A and B together. In addition, the character "/" herein generally indicates that the related objects are an "or" relationship.

It should be understood that, in the example embodiments of the present disclosure, "B corresponds (corresponding) to A" means that B is associated with A, and B can be determined according to A. However, it should also be understood that determining B based on A does not mean determining B based only on A, but also B can be determined based on A and/or other information.

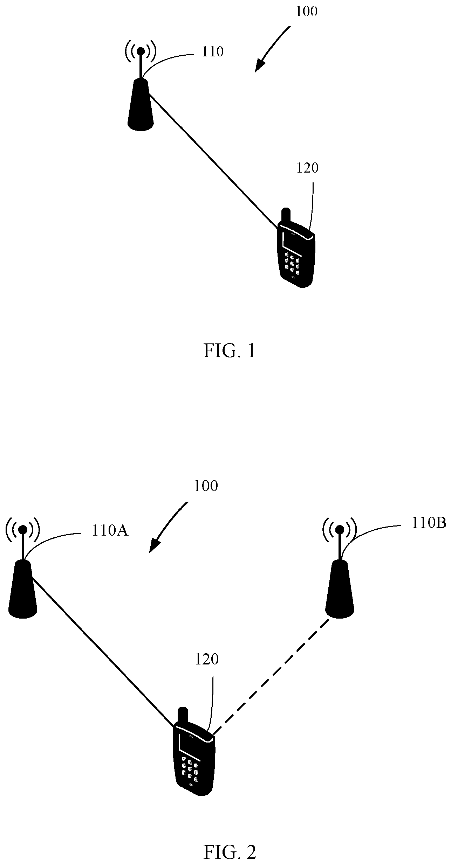

FIG. 1 and FIG. 2 show a wireless communication system 100 applied in an example embodiment of the present disclosure.

As shown in FIG. 1, the wireless communication system 100 includes a network device 110 and at least one user equipment 120 within the coverage of the network device 110. The network device 110 sends trigger signaling to the user equipment 120 to trigger the user equipment 120 to report a PDCP status.

As shown in FIG. 2, the wireless communication system 100 includes a first network device 110A and a second network device 110B, and at least one user equipment 120 moving within the coverage of the first network device 110A and the second network device 110B. The first network device 110A sends trigger signaling to the user equipment 120 to trigger the user equipment 120 to report the PDCP status to the second network device 110B. The PDCP status includes at least one of a PDCP data reception status and a PDCP data transmission status.

According to some embodiments, the wireless communication system 100 may include multiple network devices, and the coverage of each network device may include other user equipment, and embodiments of the present disclosure do not impose specific limitations on this. According to some embodiments, the network devices 110, 110A and 110B may provide communication coverage for a designated geographic area, and may communicate with user equipment (e.g., UE) within the coverage area. According to some embodiments, the network device 100 may be a base station (Base Transceiver Station, BTS) in a GSM system or a CDMA system, or a base station (NodeB, NB) in a WCDMA system, or an evolved base station (Evolutional Node B, eNB or eNodeB) in an LTE system, or a wireless controller in a Cloud Radio Access Network (CRAN). Or, the network device can be a relay station, an access point, an in-vehicle device, a wearable device, a network side device in the 5G network or a network device in a future evolved Public Land Mobile Network (PLMN).

The embodiments of the present disclosure may be applied to various communication systems, for example: a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, an Advanced Long Term Evolution (LTE-A) system, a New Radio (NR) system, an evolved NR system, a LTE-based access to unlicensed spectrum (LTE-U) system, a NR-based access to unlicensed spectrum (NR-U) system, a Universal Mobile Telecommunication System (UMTS), a Wireless Local Area Networks (WLAN), Wireless Fidelity (WiFi), a next-generation communication system or other communication systems, etc.

The user equipment 120 may be mobile or stationary. According to some embodiments, the user equipment 120 may refer to an access terminal, User Equipment (UE), user unit, user station, mobile station, mobile terminal, remote station, remote terminal, mobile device, user terminal, terminal, wireless communication device, user agent or user device. The access terminal may be a cellular phone, a cordless phone, a Session Initiation Protocol (SIP) phone, a Wireless Local Loop (WLL) station, a Personal Digital Assistant (PDA), a handheld device with wireless communication capabilities, a computing device or other processing device connected to a wireless modem, a vehicle-mounted device, a wearable device, or user equipment in a 5G network, or user equipment in a future evolved PLMN, and so on.

According to some embodiments, the communication system in the embodiments of the present disclosure can be applied to a Carrier Aggregation (CA) scenario, or a Dual Connectivity (DC) scenario, or can be applied to a Standalone (SA) network deployment scenario.

In some embodiments of the present disclosure, a network device sends a service to user equipment in a first communication mode. When there is a situation that the communication mode needs to be switched, a communication mode switching mechanism is triggered to switch to a second communication mode to send the service to the user.

The situations that trigger the communication mode switching include but are not limited to one of the following situations:
the UE is in a cell that can support the MBMS service, and receives the service in the multicast mode in the cell; if the UE detects that the MBSFN signal is weak, it needs to switch the communication mode for receiving the service from multicast to unicast; or,
the UE is in a cell that can support the MBMS service, but because the MBSFN signal is weak, the service is received in the unicast mode; if the UE detects that the MBSFN signal is enhanced, the communication mode for receiving the service can be switched from unicast to multicast; or,
when the UE moves from a cell that can support the MBMS service to another cell that does not support the MBMS service, the communication mode for receiving the service needs to be switched from multicast to unicast; or,
the UE moves from a cell that does not support the MBMS service to a cell that supports the MBMS service, and the communication mode for receiving the service can to be switched from unicast to multicast.

Implementations of the switching of communication modes will be described in detail through the following example embodiments.

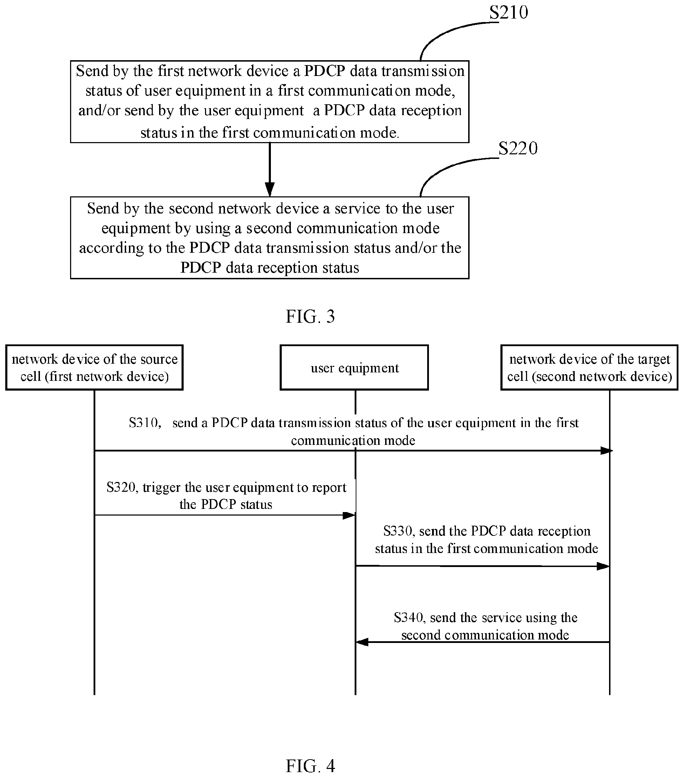

FIG. 3 is a flowchart of a communication mode switching method according to an example embodiment of the present disclosure. This embodiment is illustrated by taking an example where the method is applied to a first network device. The method includes:
In S210, the first network device sends a PDCP data transmission status of user equipment in a first communication mode, and/or the user equipment sends a PDCP data reception status in the first communication mode.

The first network device sends the PDCP data transmission status of the user equipment in the first communication mode to the second network device, and/or the user equipment sends the PDCP data reception status in the first communication mode to the second network device.

In S220, the second network device sends a service to the user equipment by using a second communication mode according to the PDCP data transmission status and/or the PDCP data reception status.

When the user terminal moves between two cells, the first network device is the network device of the source cell, and the second network device is the network device of the target cell. The first network device and the second network device are different network devices. When the user terminal moves within a cell, the first network device and the second network device are the same network device. When the first network device and the second network device are the same network device, the first network device sends the PDCP data transmission status of the user equipment in the first communication mode to the second network device, which belongs to data communication within the device.

During the communication mode switching procedure, the first network device sends the PDCP data transmission status and/or the user equipment sends the PDCP data reception status to the second network device, thereby ensuring continuity of PDCP sequence numbers and realizing lossless switching at the PDCP layer.

According to some embodiments, the PDCP data transmission status and/or the PDCP data reception status is information related to the PDCP sequence number.

When the user equipment moves from one cell to another cell, the second network device is the network device of the target cell; when the user switches the communication mode in one cell, the second network device is considered as the network device of the cell. This is the case in the following embodiments of the present disclosure, which will not be repeated.

Optionally, in the embodiments of the present disclosure, both the first communication mode and the second communication mode may be either unicast or multicast. Specifically, for example, the first communication mode is multicast and the second communication mode is unicast; or, the first communication mode is unicast and the second communication mode is multicast; or, when the user equipment moves from one cell to another cell, both the first communication mode and the second communication mode are unicast or both are multicast.

In traditional communication systems, unicast-multicast switching is implemented through an application layer server or a core network element. Since the switching is implemented at a higher layer, it is difficult to achieve lossless switching. In addition, due to the large number of network elements involved in the switching procedure, the switching delay is large. In the above-mentioned embodiments of the present disclosure, the PDCP data transmission status or PDCP data reception status of the user equipment in the first communication mode is sent to the second network device, that is, the communication mode switching is performed through the PCDP layer, which can realize lossless switching. Moreover, because the switching at the PDCP layer is generally implemented by an access layer network element, the unicast-multicast switching at the access layer network element can reduce the number of network elements involved in the switching procedure, and thus the switching delay can be reduced.

FIG. 4 is a flowchart of a communication mode switching method according to another example embodiment of the present disclosure.

On the basis of the embodiment in FIG. 3, FIG. 4 shows a situation in which the above communication mode switching method is applied to user equipment moving across cells. That is, the user equipment moves from the source cell to the target cell. The network device of the source cell uses the first communication mode to send the service to the user equipment, and the network device of the target cell uses the second communication mode to send the service to the user equipment. The network device before the communication mode switching is the network device of the source cell, referred to as the first network device; the network device after the communication mode switching is the network device of the target cell, referred to as the second network device. Both the first network device and the second network device are access layer network devices. The method includes:

In S310, the first network device sends a PDCP data transmission status of the user equipment in the first communication mode to the second network device.

In S340, the second network device sends the service to the user equipment by using the second communication mode. Optionally, according to the PDCP data transmission status, the second network device sends the service to the user equipment using the second communication mode.

According to some embodiments, the PDCP data transmission status includes at least one of the following:
1) a PDCP sequence number (PDCP SN) associated with last data which has been sent by the first network device to the user equipment;
2) an input variable for ciphering/integrity protection associated with the last data which has been sent by the first network device to the user equipment, or a part of the input variable, except the PDCP SN, associated with the last data which has been sent by the first network device to the user equipment;
3) a PDCP SN associated with first data which needs to be sent by the second network device to the user equipment;
4) an input variable for ciphering/integrity protection associated with the first data which needs to be sent by the second network device to the user equipment;
5) a part of the input variable, except the PDCP SN, associated with the first data which needs to be sent by the second network device to the user equipment.

According to some embodiments, the PDCP data transmission status may further include at least one of the following:
1) a PDCP SN associated with data which has been sent by the first network device and for which no acknowledgement from the user equipment is received;
2) an input variable for ciphering/integrity protection associated with the data which has been sent by the first network device and for which no acknowledgement from the user equipment is received;
3) a part of the input variable, except the PDCP SN, associated with the data which has been sent by the first network device and for which no acknowledgement from the user equipment is received.

According to some embodiments, the user equipment may also report its PCDP status to the second network device. Before S340, the method may further include:
In S320, the user equipment is triggered to report the PDCP status. The PDCP status includes at least one of the PDCP data transmission status and the PDCP data reception status. In this embodiment, the PDCP status including the PDCP data reception status is taken as an example. The order of S320 and S310 is not limited, for example, S320 can be before S310, or after S310, or at the same time as S310.
In S330, the user equipment sends the PDCP data reception status to the second network device.

Illustratively, S340 specifically includes:
according to the PDCP data transmission status and/or the PDCP data reception status, sending, by the second network device, the service to the user equipment by using the second communication mode.

According to some embodiments, triggering the user equipment to report the PDCP status in S320 may include:
according to a Radio Link Control (RLC) mode of the user equipment under the network equipment of the source cell and/or the network equipment of the target cell, triggering the user equipment to report the PDCP status; optionally, if the RLC mode of the user equipment is Acknowledge Mode (AM), triggering the user equipment to report the PDCP status.

Alternatively, the network device of the source cell and/or the network device of the target cell sends configuration information to the user equipment. The configuration information is used to trigger the user equipment to report the PDCP status.

According to some embodiments, the PDCP data reception status includes at least one of the following:
1) PDCP SN associated with at least one data which has been correctly received by the user equipment under the first network device (i.e., in the first communication mode);
2) an input variable for ciphering/integrity protection associated with at least one data which has been correctly received by the user equipment under the first network device (i.e., in the first communication mode, or a part of the input variable except the PDCP SN associated with at least one data which has been correctly received by the user equipment under the first network device (i.e., in the first communication mode;
3) a PDCP SN associated with at least one data which is not correctly received by the user equipment under the first network device (i.e., in the first communication mode);
4) an input variable for ciphering/integrity protection associated with at least one data which is not correctly received by the user equipment under the first network device (i.e., in the first communication mode), or a part of the input variable except the PDCP SN associated with at least one data which is not correctly received by the user equipment under the first network device (i.e., in the first communication mode).

In the embodiment shown in FIG. 4, the network device of the source cell sends the PDCP data transmission status of the user equipment in the first communication mode to the network device of the target cell, thereby ensuring that the PDCP sequence numbers of the user equipment are continuous and network equipment of the target cell can switch to the second communication state without loss according to the PDCP data transmission status to continue to send services to the user equipment through the second communication mode. Further, because the switching at the PDCP layer is generally implemented by the access layer network elements, the unicast-multicast switching at the access layer network elements can reduce the number of the network elements involved in the switching procedure and can thus reduce the switching delay.

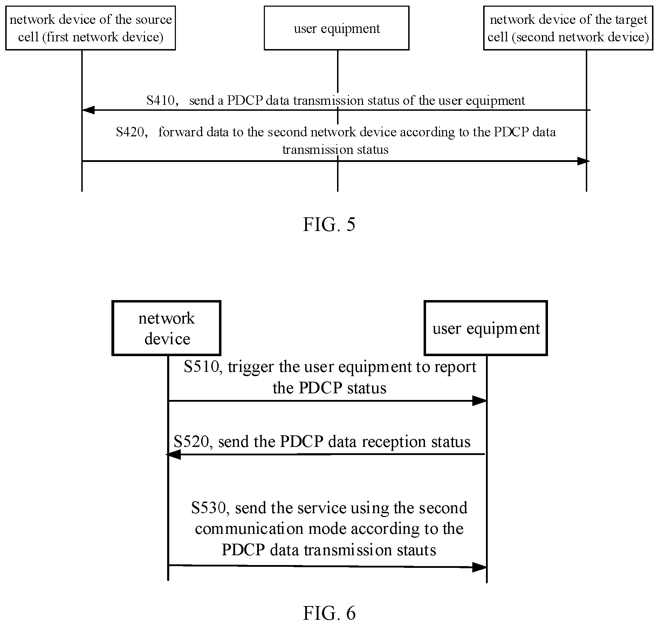

FIG. 5 is a flowchart of a communication mode switching method according to an example embodiment of the present disclosure. FIG. 5 shows a situation in which the above communication mode switching method is applied to a user equipment moving across cells. That is, the user equipment moves from the source cell to the target cell. The network device of the source cell uses the first communication mode to send the service to the user equipment, and the network device of the target cell uses the second communication mode to send the service to the user equipment. The network device before the communication mode switching is the network device of the source cell, referred to as the first network device; the network device after the communication mode switching is the network device of the target cell, referred to as the second network device. Both the first network device and the second network device are access layer network devices. The method includes:
In S410, the second network device sends the PDCP data transmission status of the user equipment to the first network device.

According to some embodiments, the PDCP data transmission status includes at least one of the following:
1) a PDCP sequence number associated with last data which needs to be forwarded by the first network device to the second network device;
2) an input variable for ciphering/integrity protection associated with the last data which needs to be forwarded by the first network device to the second network device;
3) a part of the input variable, except a PDCP sequence number, associated with the last data which needs to be forwarded by the first network device to the second network device.

The first network device uses the first communication mode to deliver the service to the user equipment according to the PDCP data transmission status.

In S420, the first network device forwards data to the second network device according to the PDCP data transmission status.

According to some embodiments, the first network device forwards the last data that needs to be forwarded to the second network device to the second network device according to the PDCP data transmission status.

Correspondingly, the second network device receives data forwarding performed by the first network device according to the PDCP data transmission status.

Optionally, in the embodiments of the present disclosure, both the first communication mode and the second communication mode may be either unicast or multicast. Specifically, for example, the first communication mode is multicast and the second communication mode is unicast; or, the first communication mode is unicast and the second communication mode is multicast; or, when the user equipment moves from one cell to another cell, both the first communication mode and the second communication mode are unicast or both are multicast.

In the embodiment shown in FIG. 5, the network equipment of the target cell sends the PDCP data transmission status of the user equipment to the first network equipment, thereby ensuring that the PDCP sequence numbers of the user equipment are continuous and the first network device can forward the last data to the second network device according to the PDCP data transmission status, realizing a lossless switch to the second communication state to continues to send services to the user equipment through the second communication mode. Further, because the switching at the PDCP layer is generally implemented by the access layer network elements, the unicast-multicast switching at the access layer network elements can reduce the number of network elements involved in the switching procedure, and can thus reduce the switching delay.

FIG. 6 is a flowchart of a communication mode switching method according to an example embodiment of the present disclosure. On the basis of the embodiment based on FIG. 3, this embodiment is applied to the situation where the user equipment performs communication mode switching in the same cell. In this embodiment, the first network device before the communication mode switching and the second network device after the communication switching are the same network device.

The method includes:
In S520, the user equipment sends the PDCP data reception status in the first communication mode to the network device.
In S530, the network device sends the service to the user equipment by using the second communication mode. Optionally, according to the PDCP data transmission status and/or the PDCP data reception status of the user equipment in the first communication mode, the network device uses the second communication mode to send the service to the user equipment.

In the procedure of the communication mode switching, the network device switches to the second communication mode to deliver the service according to the PDCP data transmission status and/or the PDCP data reception status sent by the user equipment, thereby ensuring the continuity of PDCP sequence numbers and achieving lossless switching at the PDCP layer. Optionally, the PDCP data transmission status includes at least one of the following:
1) PDCP SN associated with the last data which has been sent by the network device to the user equipment in the first communication mode;
2) an input variable for ciphering/integrity protection associated with the last data which has been sent by the network device to the user equipment in the first communication mode, or a part of the input variable, except PDCP SN, associated with the last data which has been sent by the network device to the user equipment in the first communication mode;
3) PDCP SN associated with the first data which is to be sent by the network device to the user equipment in the second communication mode;
4) an input variable for ciphering/integrity protection associated with the first data which is to be sent by the network device to the user equipment in the second communication mode, or a part of the input variable, except PDCP SN, associated with the first data which is to be sent by the network device to the user equipment in the second communication mode.

According to some embodiments, the PDCP data transmission status may further include at least one of the following:
1) PDCP SN (PDCP sequence number) associated with data which has been sent by the network device and for which no acknowledgement from the user equipment is received;
2) an input variable for ciphering/integrity protection associated with data which has been sent by the network device and for which no acknowledgement from the user equipment is received, or a part of the input variable, except PDCP SN, associated with data which has been sent by the network device and for which no acknowledgement from the user equipment is received.

According to some embodiments, before S520, the method may further include:

In S510, the user equipment is triggered to report the PDCP status.

According to some embodiments, triggering the user equipment to report the PDCP status in S510 may specifically include:
according to the RLC mode of the user equipment under the network device, determining to trigger the user equipment to report the PDCP status; optionally, if the RLC mode of the user equipment is the AM mode, reporting, by the user equipment, the PDCP status; or,
sending, by the network device, configuration information to the user equipment, wherein the configuration information is used to trigger the user equipment to report the PDCP status. Optionally, the PDCP status includes at least one of a PDCP data transmission status and a PDCP data reception status. This embodiment takes the PDCP status including the PDCP data reception status as an example for illustration.

According to some embodiments, the PDCP data reception status includes at least one of the following:
1) PDCP SN associated with at least one piece of data that has been correctly received by the user equipment in the first communication mode of the network device;
2) an input variable for ciphering/integrity protection associated with at least one piece of data that has been correctly received by the user equipment in the first communication mode of the network device, or a part of the input variable, except PDCP SN, associated with at least one piece of data that has been correctly received by the user equipment in the first communication mode of the network device;
3) PDCP SN associated with at least one piece of data that is not correctly received by the user equipment in the first communication mode of the network device;
4) an input variable for ciphering/integrity protection associated with at least one piece of data that is not correctly received by the user equipment in the first communication mode of the network device, or a part of the input variable, except PDCP SN, associated with at least one piece of data that is not correctly received by the user equipment in the first communication mode of the network device.

In the embodiment shown in FIG. 6, according to the PDCP data transmission status of the user equipment in the first communication mode, the network device can send services to the user equipment through the second communication mode according to the PDCP data transmission status. Thus, lossless switching of the communication mode can be realized at the PCDP layer. Also, because the switching at the PDCP layer is generally implemented by the access layer network elements, the unicast-multicast switching at the access layer network element can reduce the number of network elements involved in the switching procedure, and can thus reduce the switching delay.

For details that are not detailed in the embodiments shown in FIG. 6, please refer to the same or corresponding parts in the embodiment shown in FIG. 4, which will not be repeated here.

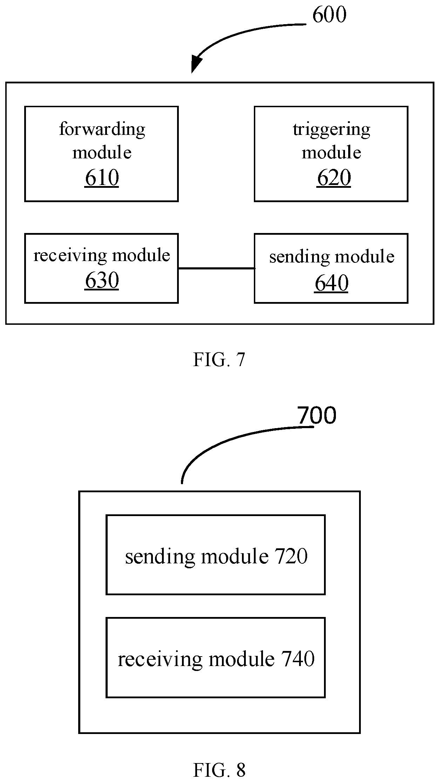

FIG. 7 is block diagram of a communication mode switching device 600 according to an example embodiment of the present disclosure. The communication mode switching device is applied to the first network device, especially the first network device of the access layer. The communication mode switching device includes a forwarding module 610.

The forwarding module 610 is configured to send a Packet Data Convergence Protocol (PDCP) data transmission status of user equipment in a first communication mode to a second network device. The second network device is configured to use a second communication mode to send a service to the user equipment according to the PDCP data transmission status.

According to some embodiments, the PDCP data transmission status includes at least one of the following:
a PDCP sequence number associated with last data which has been sent by the first network device to the user equipment;
an input variable for ciphering/integrity protection associated with the last data which has been sent by the first network device to the user equipment;
a part of the input variable, except a PDCP sequence number, associated with the last data that has been sent by the first network device to the user equipment;
a PDCP sequence number associated with first data which needs to be sent by the second network device to the user equipment;
an input variable for ciphering/integrity protection associated with the first data which needs to be sent by the second network device to the user equipment;
a part of the input variable, except a PDCP sequence number, associated with the first data which needs to be sent by the second network device to the user equipment;
a PDCP sequence number associated with data which has been sent by the first network device and for which no acknowledgement from the user equipment is received; and
an input variable for ciphering/integrity protection associated with the data which has been sent by the first network device and for which no acknowledgement from the user equipment is received; or, a part of the input variable, except a PDCP sequence number, associated with the data which has been sent by the first network device and for which no acknowledgement from the user equipment is received.

When the user equipment implements communication mode switching across cells, the network device of the source cell needs to send the PDCP data transmission status to the network device of the target cell (that is, the above-mentioned another network device), so that the network device of the target cell can realize the switching of the communication mode according to the PDCP transmission status.

According to some embodiments, the communication mode switching device further includes:
a triggering module 620 configured to trigger the user equipment to report a PDCP status to the second network device.

According to some embodiments, the triggering module 620 is configured to:
send configuration information, wherein the configuration information is used to trigger the user equipment to report the PDCP status to the second network device. According to some embodiments, the configuration information is used to trigger the user equipment to report a PDCP data reception status to the second network device; wherein the second network device is configured to use the second communication mode to deliver the service to the user equipment according to the PDCP data transmission status and/or the PDCP data reception status.

According to some embodiments, the communication mode switching device further includes:
a receiving module 630 configured to receive the PDCP data transmission status of the user equipment in the first communication mode sent by another network device, and/or, the PDCP data reception status reported by the user equipment;
a sending module 640 configured to deliver a service to the user equipment by using the second communication mode according to the PDCP data transmission status and/or the PDCP data reception status. When the receiving module 630 only receives the PDCP data transmission status sent by the another network device, the sending module 640 uses the second communication mode to deliver services to the user equipment according to the PDCP data transmission status; when the module 630 receives the PDCP data transmission status and the PDCP data reception status, the sending module 640 uses the second communication mode to deliver the services to the user equipment according to the PDCP data transmission status and/or the PDCP data reception status.

In this embodiment, the communication mode switching device sends the PDCP data transmission status of the user equipment in the first communication mode to the network device of another cell, so that the network device of the another cell can send the services to the user equipment using the second communication mode according to the PDCP data transmission status and the sequence numbers of the user equipment. In this way, the communication mode switching is performed at the PCDP layer, and lossless switching can be realized. Also, because the switching is performed at the PDCP layer, the communication mode switching device is generally applied to the access layer network element, performing the unicast-multicast switching at the access layer network element can reduce the number of network elements involved in the switching procedure and thus reduce the switching delay.

For details that are not detailed in this embodiment, please refer to the same or corresponding parts in the above method embodiments, and details are not repeated here.

FIG. 8 is a block diagram of a communication mode switching device 700 according to an example embodiment of the present disclosure. The communication mode switching device is applied to the second network device, especially the second network device of the access layer. The communication mode switching device includes a sending module 720.

The sending module 720 is configured to send a Packet Data Convergence Protocol (PDCP) data transmission status of user equipment to a first network device, wherein the first network device is configured to use a first communication mode to deliver a service to the user equipment according to the PDCP data transmission status.

In an optional design of the present disclosure, the PDCP data transmission status includes at least one of the following:
a PDCP sequence number associated with last data which needs to be forwarded by the first network device to the device;
an input variable for ciphering/integrity protection associated with the last data which needs to be forwarded by the first network device to the device; and
a part of the input variable, except a PDCP sequence number, associated with the last data which needs to be forwarded by the first network device to the device.

In an optional design of the present disclosure, the device further includes:
a receiving module 740 configured to receive data forwarding performed by the first network device according to the PDCP data transmission status.

In an optional design of the present disclosure, the device is an access layer network device.

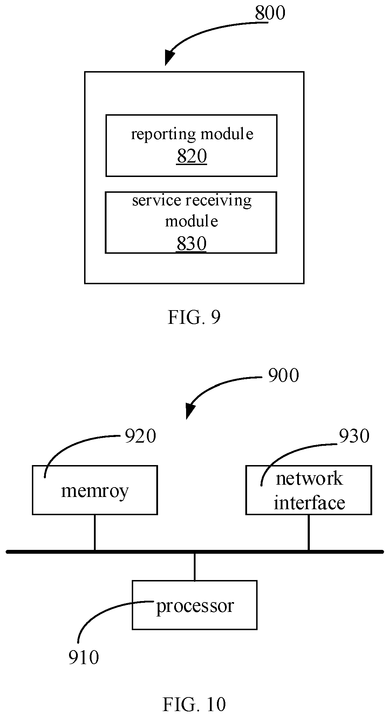

FIG. 9 is a block diagram of a communication mode switching device 800 according to an example embodiment of the present disclosure. The communication mode switching device is applied in user equipment. The communication mode switching device includes a reporting module 820 and a service receiving module 830.

The reporting module 820 is configured to report a Packet Data Convergence Protocol (PDCP) data reception status in a first communication mode to a second network device; and
the service receiving module 830 is configured to receive a service which is delivered by the second network device using a second communication mode.

According to some embodiments, the PDCP data reception status includes at least one of the following:
a PDCP sequence number associated with at least one data which has been correctly received by the device in the first communication mode;
an input variable for ciphering/integrity protection associated with at least one data which has been correctly received by the device in the first communication mode;
a part of the input variable, except a PDCP sequence number, associated with at least one data which has been correctly received by the device in the first communication mode;
a PDCP sequence number associated with at least one data which is not correctly received by the device in the first communication mode;
an input variable for ciphering/integrity protection associated with at least one data which is not correctly received by the device in the first communication mode; or, a part of the input variable, except a PDCP sequence number, associated with at least one data which is not correctly received by the device in the first communication mode.

According to some embodiments, the service receiving module 830 is specifically configured to receive the service which is delivered by the second network device through the second communication mode according to the PDCP data transmission status and/or the PDCP data reception status of the communication mode switching device in the first communication mode.

According to some embodiments, the communication mode switching device further includes a reporting module 820 which is configured to:
in response to a trigger condition being satisfied, report a PDCP status to the second network device.

According to some embodiments, the reporting module 820 is configured to:
determine to trigger the user equipment to report the PDCP status according to a RLC mode of the device;
   or,
trigger the user equipment to report the PDCP status according to configuration information sent by the network device.

According to some embodiments, the reporting module 820 is configured to: in response to that the RLC mode of the device is a Acknowledge Mode (AM), report the PDCP status. Optionally, the reporting module 820 is specifically configured to report the PDCP data reception status in the first communication mode to the second network device according to one of the following conditions:
according to the RLC mode of the device under the second network device; optionally, if the RLC mode of the device under the second network device is the AM mode, reporting by the user equipment the PDCP status; or,
configuration information delivered by the second network device.

When the user equipment moves across cells and switches the communication mode, the trigger reporting module 820 receives the trigger signaling using the network device of the source cell, and reports the PDCP data reception in the first communication mode to the network device of the target cell state, and the network device of the target cell delivers the service through the second communication mode. When the user equipment switches the communication mode in the same cell, the trigger reporting module 820 receives the trigger signaling of the network device in the cell, and report the PDCP data reception status in the first communication mode to the network device in the cell, and the network device in the cell delivers the service through the second communication mode.

In this embodiment, the communication mode switching device keeps the PDCP sequence number unchanged during the switching procedure, and the network device switches the communication mode for sending the service to the second communication mode according to the PDCP data transmission status in the first communication mode and the sequence number of the user equipment. That is, in the fifth embodiment of the present application, the communication mode switching is performed through at PCDP layer, so that lossless switching can be realized. Also, because the switching at the PDCP layer is generally implemented by the access layer network element, performing the unicast-multicast switching at the access layer network element can reduce the number of network elements involved in the switching procedure and can thus reduce switching delay.

For details that are not detailed in the embodiments, please refer to the same or corresponding parts in the above method embodiments, and details are not repeated here.

FIG. 10 is a schematic structural diagram of a communication mode switching device according to an example embodiment of the present disclosure.

The communication mode switching device 900 includes: a processor 910, a memory 920 and a network interface 930. The processor 910 invokes a program in the memory 920 to perform the corresponding processes implemented by the network device in any of the communication mode switching methods provided in the foregoing embodiments, or perform corresponding processes implemented by the user equipment in any of the communication mode switching methods provided in the foregoing embodiments, and sends the execution result through the network interface 930.

The processor 910 may be an independent component, or may be a collective term for multiple processing components. For example, it may be a CPU, or an ASIC, or one or more integrated circuits configured to implement the above methods, such as at least one microprocessor DSP, or at least one programmable gate array (FPGA), or the like.

The present disclosure is described with reference to flowchart illustrations and/or block diagrams of methods, apparatus (systems), and computer program products according to embodiments of the present disclosure. It will be understood that each flow and/or block in the flowcharts and/or block diagrams, and combinations of flows and/or blocks in the flowcharts and/or block diagrams, can be implemented by computer program instructions. These computer program instructions may be provided to a processor of a general purpose computer, special purpose computer, embedded processor, chip or other programmable data processing device to produce a machine that causes the instructions to be executed by the processor of the computer or other programmable data processing device to create means for realizing the functions specified in a flow or flows of the flowcharts and/or a block or blocks of the block diagrams. The program may be stored in a computer-readable storage medium, and the storage medium may include a read only memory (ROM), a random access memory (RAM), a magnetic disk or an optical disk, and the like.

The embodiments illustrated above are not intended to limit the present disclosure, and those skilled in the art can devise a number of alternative examples within the scope of the claims. Those skilled in the art will appreciate that appropriate adjustments, modifications, etc. may be made to specific implementations without departing from the scope of the present disclosure as defined by the appended claims. Therefore, any modifications and changes made in accordance with the principles of the present disclosure are within the scope of the present disclosure as defined by the appended claims.

## Claims

1. A communication mode switching method, applied to a first network device of a source cell, wherein the method comprises:
sending (S210), by the first network device of the source cell, a Packet Data Convergence Protocol, PDCP, data transmission status of user equipment in a first communication mode to a second network device of a target cell, wherein the second network device is configured to use a second communication mode to deliver a service to the user equipment according to the PDCP data transmission status;
wherein the method further comprises: triggering, by the first network device, the user equipment to report a PDCP reception status to the second network device by sending configuration information, wherein the configuration information is used to trigger the user equipment to report the PDCP reception status to the second network device.

2. The method according to claim 1, wherein the PDCP data transmission status comprises:
a PDCP sequence number associated with last data which has been sent by the first network device to the user equipment.

3. The method according to any one of claims 1 to 2, wherein the first network device is an access layer network device.

4. A communication mode switching method, applied to user equipment, wherein the method comprises:
reporting a Packet Data Convergence Protocol, PDCP, data reception status in a first communication mode to a second network device of a target cell; and
receiving a service which is delivered by the second network device using a second communication mode;
wherein the method further comprises:
in response to a trigger condition being satisfied, reporting the PDCP reception status to the second network device;
wherein reporting the PDCP reception status to the second network device in response to the trigger condition being satisfied comprises:
triggering the user equipment to report the PDCP reception status to the second network device according to configuration information sent by a first network device of a source cell.

5. The method according to claim 4, wherein the PDCP data reception status comprises: a PDCP sequence number associated with at least one data which has been correctly received by the user equipment in the first communication mode.

6. A communication mode switching device, comprising a first network device of a source cell, comprising:
a forwarding module configured to send a Packet Data Convergence Protocol, PDCP, data transmission status of user equipment in a first communication mode to a second network device of a target cell, wherein the second network device is configured to use a second communication mode to send a service to the user equipment according to the PDCP data transmission status;
wherein the communication mode switching device further comprises a triggering module configured to: trigger the user equipment to report a PDCP reception status to the second network device by sending configuration information, wherein the configuration information is used to trigger the user equipment to report the PDCP reception status to the second network device.

7. The device according to claim 6, wherein the PDCP data transmission status comprises:
a PDCP sequence number associated with last data which has been sent by the first network device to the user equipment.

8. The device according to any one of claims 6 to 7, wherein the device is an access layer network device.

9. A network device, comprising: a processor, a memory and a network interface, wherein the processor is configured to call a program in the memory to perform the communication mode switching method according to any one of claims 1 to 3 and to send an execution result through the network interface.

## Patentansprüche

1. Verfahren zur Umschaltung eines Kommunikationsmodus, das auf eine erste Netzwerkvorrichtung einer Ursprungszelle angewendet wird, wobei das Verfahren umfasst:
Senden (S210), durch die erste Netzwerkvorrichtung der Ursprungszelle, eines PDCP (Packet Data Convergence Protocol, Paketdatenkonvergenzprotokoll), -Datenübertragungsstatus einer Benutzereinrichtung in einem ersten Kommunikationsmodus an eine zweite Netzwerkvorrichtung einer Zielzelle, wobei die zweite Netzwerkvorrichtung dafür ausgelegt ist, einen zweiten Kommunikationsmodus zu verwenden, um einen Dienst an die Benutzereinrichtung bereitzustellen, entsprechend dem PDCP-Datenübertragungsstatus;
wobei das Verfahren ferner umfasst:
Veranlassen, durch die erste Netzwerkvorrichtung, der Benutzereinrichtung, einen PDCP-Empfangsstatus an die zweite Netzwerkvorrichtung zu melden, durch Senden von Konfigurationsinformationen, wobei die Konfigurationsinformationen verwendet werden, um die Benutzereinrichtung zu veranlassen, den PDCP-Empfangsstatus an die zweite Netzwerkvorrichtung zu melden.

2. Verfahren gemäß Anspruch 1, wobei der PDCP-Datenübertragungsstatus umfasst:
eine PDCP-Sequenznummer, die mit den letzten Daten verknüpft ist, die von der ersten Netzwerkvorrichtung an die Benutzereinrichtung gesendet wurden.

3. Verfahren gemäß einem der Ansprüche 1 bis 2, wobei die erste Netzwerkvorrichtung eine Zugangsschicht-Netzwerkvorrichtung ist.

4. Verfahren zur Umschaltung eines Kommunikationsmodus, das auf eine Benutzereinrichtung angewendet wird, wobei das Verfahren umfasst:
Melden eines PDCP (Packet Data Convergence Protocol, Paketdatenkonvergenzprotokoll), -Datenempfangsstatus in einem ersten Kommunikationsmodus an eine zweite Netzwerkvorrichtung einer Zielzelle; und
Empfangen eines Dienstes, der durch die zweite Netzwerkvorrichtung über einen zweiten Kommunikationsmodus zugestellt wird;
wobei das Verfahren ferner umfasst:
in Reaktion auf die Erfüllung einer Auslösebedingung, Melden des PDCP-Empfangsstatus an die zweite Netzwerkvorrichtung;
wobei das Melden des PDCP-Empfangsstatus an die zweite Netzwerkvorrichtung in Reaktion auf die Erfüllung der Auslösebedingung umfasst:
Veranlassen der Benutzereinrichtung, den PDCP-Empfangsstatus an die zweite Netzwerkvorrichtung zu melden, gemäß den Konfigurationsinformationen, die durch eine erste Netzwerkvorrichtung einer Ursprungszelle gesendet wurden.

5. Verfahren gemäß Anspruch 4, wobei der PDCP-Datenempfangsstatus umfasst:
eine PDCP-Sequenznummer, die mit mindestens einem Datenwert verknüpft ist, der durch die Benutzereinrichtung im ersten Kommunikationsmodus korrekt empfangen wurde.

6. Vorrichtung zur Umschaltung eines Kommunikationsmodus, umfassend eine erste Netzwerkvorrichtung einer Ursprungszelle, umfassend:
ein Weiterleitungsmodul, das ausgelegt ist zum Senden eines PDCP (Packet Data Convergence Protocol, Paketdatenkonvergenzprotokoll), -Datenübertragungsstatus einer Benutzereinrichtung in einem ersten Kommunikationsmodus an eine zweite Netzwerkvorrichtung einer Zielzelle, wobei die zweite Netzwerkvorrichtung dafür ausgelegt ist, einen zweiten Kommunikationsmodus zu verwenden, um einen Dienst an die Benutzereinrichtung zu senden, entsprechend dem PDCP-Datenübertragungsstatus;
wobei die Vorrichtung zur Umschaltung eines Kommunikationsmodus ferner ein Auslösemodul umfasst, das ausgelegt ist zum: Veranlassen der Benutzereinrichtung, einen PDCP-Empfangsstatus an die zweite Netzwerkvorrichtung zu melden, durch Senden von Konfigurationsinformationen, wobei die Konfigurationsinformationen verwendet werden, um die Benutzereinrichtung zu veranlassen, den PDCP-Empfangsstatus an die zweite Netzwerkvorrichtung zu melden.

7. Vorrichtung gemäß Anspruch 6, wobei der PDCP-Datenübertragungsstatus umfasst:
eine PDCP-Sequenznummer, die mit den letzten Daten verknüpft ist, die von der ersten Netzwerkvorrichtung an die Benutzereinrichtung gesendet wurden.

8. Vorrichtung gemäß einem der Ansprüche 6 bis 7, wobei die Vorrichtung eine Zugangsschicht-Netzwerkvorrichtung ist.

9. Netzwerkvorrichtung, umfassend: einen Prozessor, einen Speicher und eine Netzschnittstelle, wobei der Prozessor dafür ausgelegt ist, ein Programm im Speicher aufzurufen, um das Verfahren zur Umschaltung eines Kommunikationsmodus gemäß einem der Ansprüche 1 bis 3 durchzuführen und ein Ausführungsergebnis über die Netzschnittstelle zu senden.

## Revendications

1. Procédé de commutation de mode de communication, appliqué à un premier dispositif de réseau d'une cellule source, le procédé comprenant l'étape consistant à :
envoyer (S210), par le premier dispositif de réseau de la cellule source à un second dispositif de réseau d'une cellule cible, un état d'émission de données sur protocole de convergence de données par paquets (PDCP) d'un équipement d'utilisateur dans un premier mode de communication, le second dispositif de réseau étant configuré pour utiliser un second mode de communication afin de fournir un service à l'équipement d'utilisateur selon l'état d'émission de données PDCP ;
le procédé comprenant en outre l'étape consistant à : déclencher, en envoyant des informations de configuration, par le premier dispositif de réseau, l'équipement d'utilisateur pour qu'il signale un état de réception PDCP au second dispositif de réseau, les informations de configuration étant utilisées pour déclencher l'équipement utilisateur pour qu'il signale l'état de réception PDCP au second dispositif de réseau.

2. Procédé selon la revendication 1, dans lequel l'état d'émission de données PDCP comprend :
un numéro de séquence PDCP associé aux dernières données qui ont été envoyées par le premier dispositif de réseau à l'équipement d'utilisateur.

3. Procédé selon l'une quelconque des revendications 1 et 2, dans lequel le premier dispositif de réseau est un dispositif de réseau de couche d'accès.

4. Procédé de commutation de mode de communication, appliqué à un équipement d'utilisateur, le procédé comprenant les étapes consistant à :
signaler, à un second dispositif de réseau d'une cellule cible, un état de réception de données sur protocole de convergence de données par paquets (PDCP) dans un premier mode de communication ; et
recevoir un service qui est fourni par le second dispositif de réseau au moyen d'un second mode de communication ;
le procédé comprenant en outre l'étape consistant à :
en réponse à une condition de déclenchement satisfaite, signaler l'état de réception PDCP au second dispositif de réseau ;
le signalement de l'état de réception PDCP au second dispositif de réseau en réponse au fait que la condition de déclenchement est satisfaite comprenant l'étape consistant à :
déclencher l'équipement d'utilisateur pour qu'il signale l'état de réception PDCP au second dispositif de réseau selon des informations de configuration envoyées par un premier dispositif de réseau d'une cellule source.

5. Procédé selon la revendication 4, dans lequel l'état de réception de données PDCP comprend :
un numéro de séquence PDCP associé à au moins un élément de données qui a été correctement reçu par l'équipement d'utilisateur dans le premier mode de communication.

6. Dispositif de commutation de mode de communication, comprenant un premier dispositif de réseau d'une cellule source, comprenant :
un module de transfert configuré pour envoyer, à un second dispositif de réseau d'une cellule cible, un état d'émission de données sur protocole de convergence de données par paquets (PDCP) d'un équipement d'utilisateur dans un premier mode de communication, le second dispositif de réseau étant configuré pour utiliser un second mode de communication afin d'envoyer un service à l'équipement d'utilisateur selon l'état d'émission de données PDCP ;
le dispositif de commutation de mode de communication comprenant en outre un module de déclenchement configuré pour : déclencher, en envoyant des informations de configuration, l'équipement d'utilisateur pour qu'il signale un état de réception PDCP au second dispositif de réseau, les informations de configuration étant utilisées pour déclencher l'équipement utilisateur pour qu'il signale l'état de réception PDCP au second dispositif de réseau.

7. Dispositif selon la revendication 6, dans lequel l'état d'émission de données PDCP comprend :
un numéro de séquence PDCP associé aux dernières données qui ont été envoyées par le premier dispositif de réseau à l'équipement d'utilisateur.

8. Dispositif selon l'une quelconque des revendications 6 et 7, le dispositif étant un dispositif de réseau de couche d'accès.

9. Dispositif de réseau, comprenant : un processeur, une mémoire et une interface de réseau, le processeur étant configuré pour appeler un programme dans la mémoire afin de réaliser le procédé de commutation de mode de communication selon l'une quelconque des revendications 1 à 3 et pour envoyer un résultat d'exécution par l'intermédiaire de l'interface de réseau.
